# FASCICULE DE BREVET EUROPEEN

(11) **EP 1 277 428 B1**
(45) Date de publication et mention de la délivrance du brevet: **14.09.2005**
(21) Numéro de dépôt: 01117588.2
(22) Date de dépôt: 20.07.2001
(51) Int. Cl.: A47J 31/00

(54) **Machine à café prévue pour une voiture**
Kaffeemaschine für ein Automobil
Coffee machine foreseen for a car

(43) Date de publication de la demande: 22.01.2003
(73) Titulaire: SOCIETE DES PRODUITS NESTLE S.A., 1800 Vevey (CH)
(72) Inventeur: Kollep, Alexandre, 1095 Lutry (CH)
(74) Mandataire: Borne, Patrice Daniel

(56) Documents cités:
- EP-A- 0 496 940
- WO-A-95/25457
- WO-A-95/34236
- FR-A- 1 564 088
- US-A- 5 992 298
- US-A- 6 062 127
- US-A- 6 098 525

## Description

La présente invention concerne une machine à café espresso prévue pour un véhicule à bas voltage, comme une automobile, un bâteau, une caravane et autres habitacles fixes ou pouvant se déplacer.

Il existe déjà dans l'état de la technique des machines à café espresso utilisables dans des automobiles. Le brevet US 6'062'127 concerne une machine à café espresso utilisable dans une automobile. Le problème avec ce type de dispositif est que le café est obtenu dans le récipient grâce au fait que l'eau se met à bouillir et que la vapeur d'eau permet l'extraction du café. Ceci a au moins deux conséquences : d'une part, on obtient un café brûlé car la température de l'eau d'extraction est comprise entre 100 et 120 °C et d'autre part, pour ajouter l'eau dans le réservoir, il faut ouvrir et refermer toute la machine, ce qui nécessite une manutention très peu commode pour le consommateur. Une autre machine à café espresso connue est décrite dans WO 9534236.

Le but de la présente invention est de mettre à disposition du consommateur, dans un habitacle à bas voltage, une machine à café espresso ne présentant pas les inconvénients de l'état de la technique. La machine à café selon l'invention permet de diminuer les manutentions pour s'en servir et garantit la préparation d'un bon café de manière uniforme dans le temps.

La présente invention concerne une machine à café espresso prévu pour un véhicule à bas voltage comprenant un réservoir pour l'eau relié à une pompe pour l'amenée de l'eau vers un élément chauffant, lui-même relié à une tête d'extraction d'une portion de café, une fermeture mobile de ladite tête avec un moyen permettant de déplacer ladite fermeture depuis une position d'ouverture à une position de fermeture et inversement, un conduit de débit de café sur ladite fermeture et une liaison pour l'alimentation électrique, dans laquelle le chauffage de l'élément chauffant est coupé ou travaille à puissance réduite lorsque la pompe est activée.

Par véhicule à bas voltage selon la présente invention, on entend une automobile, un bâteau ou autre habitacle relié à une batterie de 12 à 50 volts. Le but de l'invention est de pouvoir faire un café espresso avec un élément chauffant prêt en une durée de l'ordre de 4 minutes. Il est bien entendu qu'après le premier chauffage de l'élément chauffant, à savoir pour les cafés suivants, la durée de chauffe est moindre. L'important dans cette machine est que l'élément chauffant ne fonctionne pas ou alors qu'à puissance réduite lorsqu'on fait l'extraction du café.

Par portion de café dans la présente description on entend tout type de portion, ausi bien une portion emballée dans du papier filtre ou du non tissé qu'une portion scellée et qui s'ouvre sous l'effet de la pression. Dans ce dernier cas, on utilise par exemple des capsules faisant l'objet du brevet EP 512'468 au nom de la demanderesse. Dans ce cas, la tête d'extraction doit présenter une aiguille comme mentionné dans le brevet EP 512'470 au nom de la demanderesse. Dans ce cas en outre, la fermeture mobile da la tête doit présenter des éléments en relief et en creux , comme décrit dans le brevet ci-dessus.

Le moyen de déplacement de la fermeture est un système à coulissement, dans lequel la fermeture est déplacée dans deux guides pour arriver à une position de blocage de ladite fermeture sur la tête d'extraction, de manière à garantir une bonne étanchéité de ladite machine lors de l'extraction de la portion de café. Le déplacement de la fermeture se fait d'abord par une translation horizontale, puis on appuie sur ladite fermeture. Dans un autre mode de réalisation, le moyen de fermeture est un système à machoires, dans lequel la tête d'extraction est fixe et la fermeture est rabattable selon un arc de cercle sur ladite tête : il faut aussi prévoir dans ce cas, un moyen de solidarisation de la fermeture sur la tête d'extraction.

Un autre grand intérêt de la machine selon l'invention est qu'on peut la charger, la faire fonctionner et la décharger avec une seule main. Il est bien entendu qu'en cas d'utilisation dans une automobile en mouvement, il est exclu que ce soit le conducteur du véhicule qui prépare le café , mais son passager.

Il est prévu aussi dans la machine selon l'invention, une partie de stockage de portions à extraire et une partie de stockage de portions extraites.

Lorsque le véhicule est en marche et que le café est préparé à ce moment là, il faut bien sûr éviter tout renversement du café. On prévoit à cet effet, un réceptacle de maintien de récipients empilés directement en dessous de la sortie du conduit de débit de café. Les récipients utilisés sont avantageusement des gobelets en plastique.

Lorsque le sonsommateur veut dégager de la machine à café la portion qui vient d'être extraite, il est bien évident que celle-ci est très chaude : on prévoit à cet effet une bague disposée dans la tête d'extraction permettant l'éjection manuelle de portions extraites.

La présente concerne également un procédé de préparation d'un café espresso de qualité uniforme dans un véhicule à bas voltage, dans lequel on procéde selon les étapes suivantes à partir d'un dispositif pour la préparation d'un café espresso:
- on chauffe un élément chauffant,
- on coupe le chauffage dudit élément ou on le réduit,
- on fait couler l'eau à travers ledit élément à l'aide d'une pompe,
- on fait une extraction de la portion de café et
- on récupère le café dans un récipient.

Par café espresso de qualité uniforme dans la présente description , on entend un café non brûlé, de bonne qualité constante tasse après tasse et également un café régulier dans une seule extraction. L'élément chauffant a normalement une puissance de 200 à 1000 Watts et il est relié comme déjà mentionné ci-dessus à une batterie de 12 à 50 Volts.

La suite de la description est faite en référence aux dessins, sur lesquels
Fig. 1 est une coupe schématique en perspective de la machine en position ouverte,
Fig. 2 est une coupe schématique en perspective de la machine en voie de fermeture,
Fig. 3 est une coupe schématique en perspective de la machine en position de fermeture et
Fig. 4 est une coupe schématique de la partie de stockage.

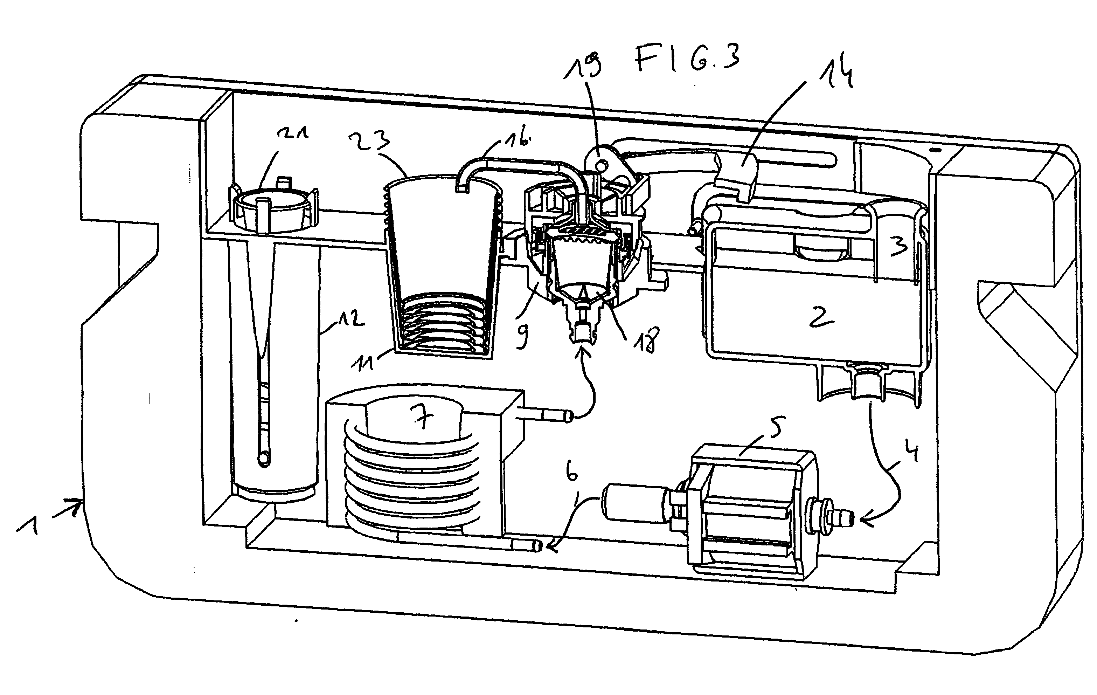

La machine selon l'invention comprend un châssis (1), dans lequel se trouve tout le mécanisme de la machine. Celui-ci comprend un réservoir d'eau (2) qu'on peut remplir par l'ouverture (3). Le conduit (4) en bas du réservoir mène à la pompe (5) et le conduit (6) à la sortie de ladite pompe va vers l'élément chauffant (7). Le conduit (8) à la sortie de l'élément chauffant mène à la tête d'extraction (9) comportant un logement (10) pour la capsule (18) à extraire. Dans le logement (10), il est prévu une bague (17) pour sortir la cartouche usagée. La fermeture mobile (15) est actionnée par un levier (14) et elle comprend un conduit de débit de café (16). La fermeture est guidée dans une glissière (20). Un réceptacle (11) est disposé directement sous le conduit de débit de café (16)(machine en position fermée, telle que sur la Fig.3) : ce réceptacle contient un empilement de gobelets (23). La machine est alimentée par exemple à une batterie de voiture par une liaison non représentée.

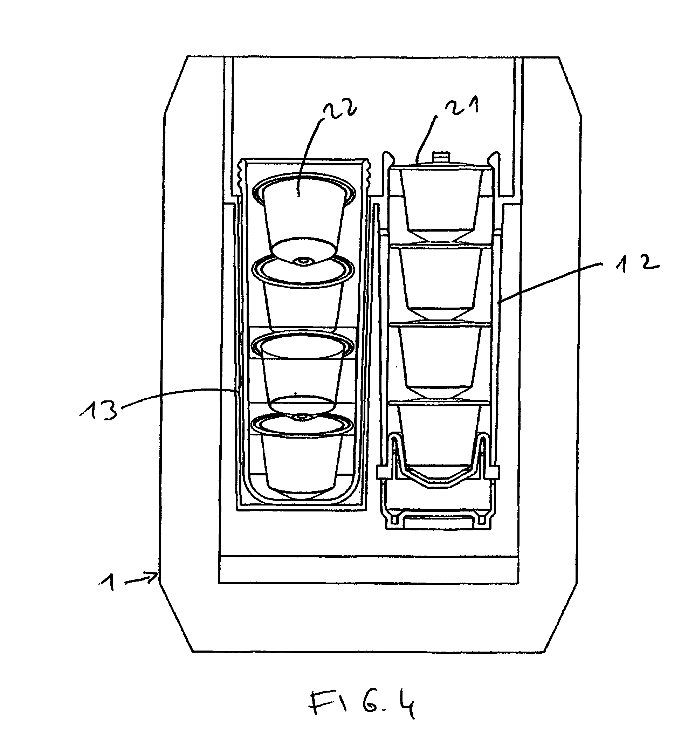

La machine comprend finalement une partie de stockage (12) de portions à extraire (21) et une partie de stockage (13) de portions extraites (22)(Fig. 4)

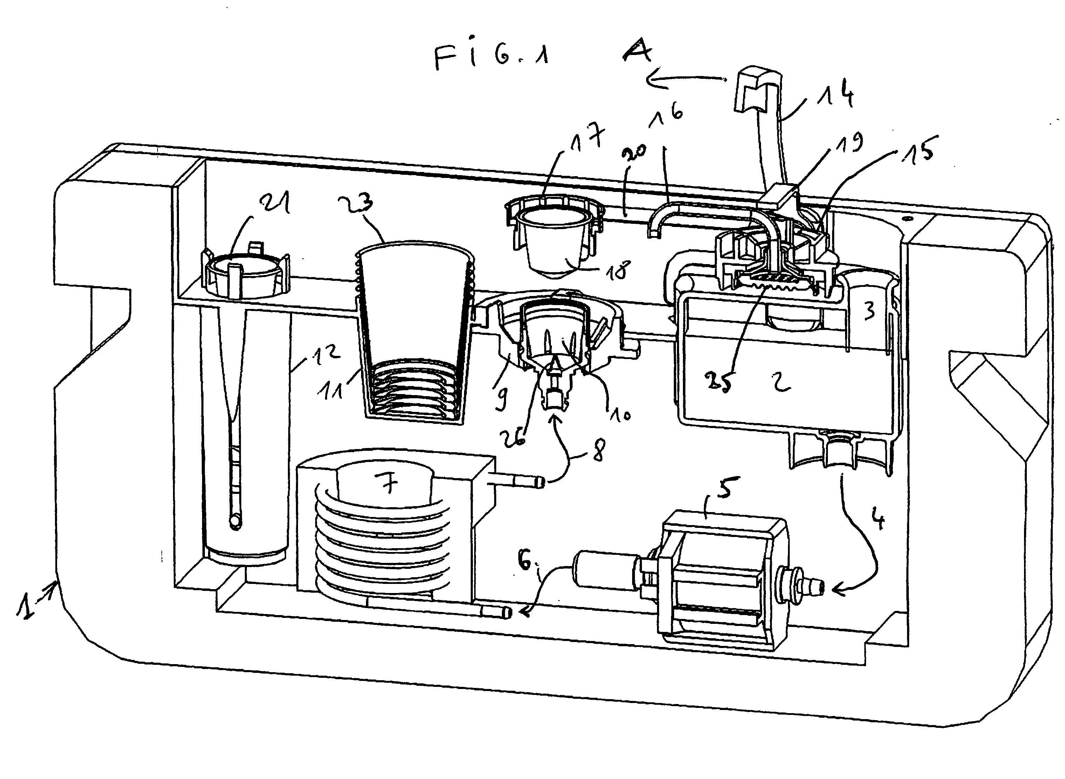

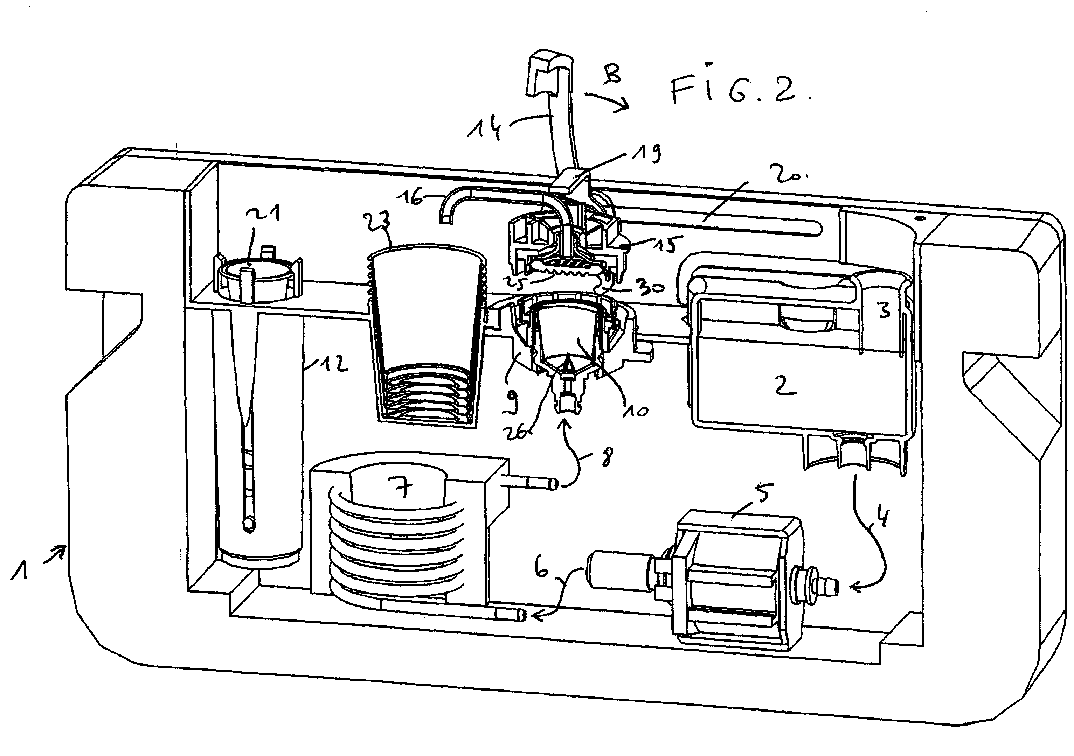

Le fonctionnement de la machine selon l'invention est le suivant : On part de la position de la Fig. 1, la bague (17) est placée dans le logement (10) de la tête d'extraction (9) et on y dépose une capsule (18) à extraire. Le consommateur agit sur le levier (14) dans le sens de la flèche A, de manière à amener la fermeture (15) en regard de la tête d'extraction (9) : c'est la position de la Fig. 2, ladite fermeture étant guidée dans la glissière (20) en translation. Le consommateur appuie alors sur ledit levier (14) pour faire descendre la partie mobile (15) et agit ensuite sur ce levier (14) dans le sens de la flèche B, de manière à solidariser de manière étanche la tête d'extraction (9) de la fermeture (15) grâce au système de verrouillage (19), et plus particulièrement par les crochets (30). Lorsque l'élément chauffant (7) a atteint la température requise, il arrête de chauffer et la pompe (5) amène l'eau du réservoir (2) jusqu'à la tête d'extraction (9). L'aiguille (26) a percé le bas de la capsule lors de son introduction et le haut de la capsule va s'appuyer contre les éléments en creux et en relief (25): lorqu'une pression suffisante est atteinte dans la capsule, la face supérieure de la capsule s'ouvre contre lesdits éléments en creux et en relief et le café s'écoule par le conduit de débit de café (16) dans le gobelet (23). Une fois que la quantité requise est atteinte, par exemple 60 ml, la pompe est arrêtée et le café est prêt. Le réceptacle (11) permet un bon maintien du café même si la voiture est en mouvement.

Il suffit alors de déverrouiller la machine en agissant sur le levier (14) et de revenir avec la fermeture (15) dans la position de la Fig. 1. Le consommateur retire la bague (17) et déverse la capsule usagée dans la partie de stockage (13), replace la bague (17) et remet une nouvelle capsule de la partie de stockage (12) dans la tête d'extraction (9), si l'autre occupant du véhicule souhaite aussi un café.

## Revendications

1. Machine à café espresso prévu pour un véhicule à bas voltage comprenant un réservoir (2) pour l'eau relié à une pompe (5) pour l'amenée de l'eau vers un élément chauffant (7), lui-même relié à une tête d'extraction (9) d'une portion de café (18), une fermeture mobile (15) de ladite tête avec un moyen permettant de déplacer ladite fermeture depuis une position d'ouverture à une position de fermeture et inversement, **caractérisée en ce que** la machine à café expresso comprend un conduit de débit de café (16) sur ladite fermeture et une liaison pour l'alimentation électrique, dans laquelle le chauffage de l'élément chauffant est coupé ou travaille à puissance réduite lorsque la pompe est activée.

2. Machine à café selon la revendication 1, dans laquelle le moyen de déplacement de la fermeture est un système à coulissement (20).

3. Machine à café selon la revendication 1, dans laquelle le moyen de déplacement de la fermeture est un système à machoires.

4. Machine à café selon l'une des revendications 1 à 3, comprenant en outre une partie de stockage de portions à extraire et une partie de stockage (12) de portions extraites.

5. Machine à café selon l'une des revendications 1 à 4, comprenant un receptacle (23) de maintien de récipients empilés directement en dessous de la sortie du conduit de débit de café.

6. Procédé de préparation d'un café espresso de qualité uniforme dans un véhicule à bas voltage, dans lequel on procéde selon les étapes suivantes à partir d'un dispositif pour la préparation d'un café espresso:
- on chauffe un élément chauffant,
- on coupe le chauffage dudit élément ou on le réduit,
- on fait couler l'eau à travers ledit élément à l'aide d'une pompe,
- on fait une extraction de la portion de café et
- on récupère le café dans un récipient.

## Patentansprüche

1. Espresso-Kaffeemaschine für ein Niederspannungsfahrzeug, umfassend einen Wasserbehälter (2), der mit einer Pumpe (5) für die Zuführung des Wassers zu einem Heizelement (7) verbunden ist, das seinerseits mit einem Extraktionskopf (9) zur Extraktion einer Kaffeeportionspackung (18) verbunden ist, und einen beweglichen Verschluss (15) für den Extraktionskopf mit einem Mittel, das die Bewegung des Verschlusses aus einer Öffnungsstellung in eine Verschlussstellung und umgekehrt gestattet, **dadurch gekennzeichnet, dass** die Espresso-Kaffeemaschine eine Leitung (16) zur Kaffeeabgabe auf dem Verschluss und eine Verbindung für die Stromversorgung aufweist, bei der die Erhitzung des Heizelements abgebrochen wird oder mit verminderter Leistung arbeitet, wenn die Pumpe aktiviert ist.

2. Kaffeemaschine nach Anspruch 1, bei der das Mittel zur Bewegung des Verschlusses ein Gleitsystem (20) ist.

3. Kaffeemaschine nach Anspruch 1, bei der das Mittel zur Bewegung des Verschlusses ein Backensystem ist.

4. Kaffeemaschine nach einem der Ansprüche 1 bis 3, umfassend außerdem einen Speicherteil für zu extrahierende Portionspakkungen und einen Speicherteil (12) für extrahierte Portionspackungen.

5. Kaffeemaschine nach einem der Ansprüche 1 bis 4, umfassend ein Gehäuse (23) zum Halten von direkt unter dem Austritt der Kaffeeabgabeleitung gestapelten Behältern.

6. Verfahren zur Herstellung von Espressokaffee von gleichmäßiger Qualität in einem Niederspannungsfahrzeug, bei dem man an einer Vorrichtung zur Herstellung von Espressokaffee die folgenden Schritte ausführt:
- man erhitzt das Heizelement,
- man bricht die Erhitzung des Heizelements ab oder verringert sie,
- man lässt mit Hilfe einer Pumpe Wasser durch dieses Element fließen,
- man nimmt eine Extraktion der Kaffee-Portionspackung vor und
- gewinnt den Kaffee in einem Behälter.

## Claims

1. Espresso coffee machine designed for a low-voltage vehicle, comprising a reservoir (2) for the water which is connected to a pump (5) to convey the water to a heating element (7), which itself is connected to an extraction head (9) for a portion of coffee (18), a mobile fastener (15) for the said head with a means which makes it possible to displace the said fastener from a position of opening to a position of closure and vice versa, **characterised in that** the espresso coffee machine comprises a duct for throughput of coffee (16) to the said fastener and a connection for the electrical supply, wherein the heating of the heating element is cut off or functions at a reduced power level when the pump is activated.

2. Coffee machine according to claim 1, wherein the means for displacement of the fastener is a sliding system (20).

3. Coffee machine according to claim 1, wherein the means for displacement of the fastener is a system with jaws.

4. Coffee machine according to any one of claims 1 to 3, additionally comprising a storage part for portions to be extracted, and a storage part (12) for portions extracted.

5. Coffee machine according to any one of claims 1 to 4, comprising a receptacle (23) to hold containers which are stacked directly below the output of the coffee throughput duct.

6. Method for preparation of an espresso coffee of regular quality in a low-voltage vehicle, wherein the method according to the following steps is applied, using a device for preparation of an espresso coffee:
- a heating element is heated;
- the heating of the said element is cut off or reduced;
- water is passed through the said element by means of a pump;
- the portion of coffee is extracted; and
- the coffee is collected in a container.
